# EUROPÄISCHE PATENTSCHRIFT

(11) **EP 3 117 133 B1**
(45) Veröffentlichungstag und Bekanntmachung des Hinweises auf die Patenterteilung: **30.10.2019**
(21) Anmeldenummer: 15707945.0
(22) Anmeldetag: 04.03.2015
(51) Int. Cl.: F16L 19/02

(54) **KUPPLUNG FÜR ROHRELEMENTE**
COUPLING FOR PIPE ELEMENTS
DISPOSITIF D'ACCOUPLEMENT POUR ÉLÉMENTS TUBULAIRES

(30) Priorität: 12.03.2014 DE 102014204565
(43) Veröffentlichungstag der Anmeldung: 18.01.2017
(73) Patentinhaber: Gemü Gebr. Müller Apparatebau GmbH & Co. Kommanditgesellschaft, 74653 Ingelfingen (DE)
(72) Erfinder: Hohenstein, Lukas, 74635 Kupferzell (DE)
(74) Vertreter: DREISS Patentanwälte PartG mbB
(86) Internationale Anmeldenummer: PCT/EP2015/054529
(87) Internationale Veröffentlichungsnummer: WO 2015/135812

(56) Entgegenhaltungen:
- US-A- 2 238 462
- US-A- 4 611 838
- US-A1- 2002 180 162

## Beschreibung

Die vorliegende Erfindung betrifft eine Kupplung zum lösbaren Verbinden von Rohrelementen in einer fluiddichten Weise mit einem ersten und einem zweiten Kupplungsteil. Mindestens eines der Kupplungsteile ist mit einem Außengewinde versehen, so dass die Kupplungsteile über eine äußere Schraubmutter miteinander verbunden werden können.

Für die Abdichtung derartiger Kupplungen ist es bekannt, zwischen den Kupplungsteilen eine Dichtung, wie zum Beispiel einen O-Ring, einzusetzen, der beim Zusammenschrauben der Kupplung komprimiert wird, so dass die Verbindung abgedichtet ist. Ein Problem solcher Dichtungssysteme für Rohrkupplungen mit einem O-Ring ist, dass der O-Ring korrekt an seinem Bestimmungsort positioniert werden muss, damit eine ausreichende Abdichtung erreicht wird. Ferner sind solche O-Ringe üblicherweise aus einem komprimierbaren, elastischen Material hergestellt, welches in einigen Fällen anfällig gegenüber Beschädigungen durch ein Prozessfluid ist. Auch sind derartige O-Ringe einer Alterung unterworfen, die mit der Zeit zu einem Leck der Kupplung führen kann.

Auf der anderen Seite sind Kupplungen für Rohrelemente bekannt, welche mit Nuten an einer Stirnfläche von einem Kupplungsflansch versehen sind, in welche vorragende Zungen eingreifen, so dass über die Formpassung eine Abdichtung der Kupplung erreicht wird. Bei derartigen Rohrkupplungen müssen die Nut und die Zunge bzw. der Vorsprung in sehr engen Toleranzen hergestellt werden, damit eine ausreichende Dichtungswirkung erreicht wird. Zudem sind in der Regel mehrere derartige Nuten und Zungen erforderlich, damit ein unerwünschtes Austreten von Fluid und eine Leckage der Rohrkupplung vermieden wird. Die US 2002/0180162 A1 beschreibt eine Verbindung von zwei Rohrstücken mit einem konkaven Abschnitt am einen Rohrstück, der in einen konvexen Abschnitt im anderen Rohrstück eingreift. Die US 2 238 462 beschreibt eine Verbindung von zwei Rohrstücken, bei der ein konkaver Abschnitt am einen Rohrstück in einen trapezförmigen Abschnitt am anderen Rohrstück eingreift. Die US 4 611 838 offenbart eine Verbindung, bei der ein außen leicht balliger Abschnitt am einen Rohrstück an einem schrägen Gegenabschnitt am anderen Rohrstück in Anlage kommt.

Demgegenüber ist es die Aufgabe der vorliegenden Erfindung, eine Kupplung für Rohrelemente für ein fluiddichtes Abdichten bereitzustellen, bei welcher ohne ein zusätzliches separates Dichtungselement eine wirksame und langfristige Abdichtung mit einem möglichst einfachen konstruktiven Aufbau der Kupplung erreicht wird.

Diese Aufgabe wird mit einer Kupplung gemäß den Merkmalen des Anspruchs 1 gelöst. Vorteilhafte Ausgestaltungen und Weiterbildungen der Erfindung sind Gegenstand der abhängigen Ansprüche.

Die erfindungsgemäße Kupplung zum lösbaren Verbinden von Rohren oder anderen rohrförmigen Elementen weist ein erstes Kupplungsteil und ein zweites Kupplungsteil auf, welche über eine Schraubmutter oder ähnliches verbindbar sind, wobei die Kupplungsteile jeweils mit einem radial nach außen sich erstreckenden Flansch versehen sind und die Flansche Stirnflächen aufweisen, welche mit einem Profil zur Abdichtung der Kupplung versehen sind. Das Profil an den Stirnflächen der Kupplungsteile weist mindestens eine umlaufende Nut und mindestens einen in die Nut eingreifenden umlaufenden Vorsprung auf, welche im gekoppelten Zustand, d. h. im geschlossenen Zustand der Kupplung, zwischen sich eine fluiddichte Abdichtung bilden. Bei einem Schließen der Kupplung durch ein Verschrauben der Kupplungsteile wird die gewölbte Dichtfläche des Vorsprungs zunehmend gegen die Gegendichtfläche gepresst, so dass eine sehr gute Abdichtung ohne ein zusätzliches Dichtungselement erreicht wird. Da kein separates Dichtungselement, wie zum Beispiel ein elastomerer O-Ring, zwischen die Kupplungsteile eingesetzt werden muss, ist die Kupplung im geschlossenen Zustand in jeder Situation fluiddicht. Die Mittel zur Abdichtung, d. h. der Vorsprung und die formentsprechende Nut, sind an den Flanschen selbst der Kupplungsteile vorgesehen. Um eine sichere Abdichtung zu erreichen, ist mit der erfindungsgemäßen Kupplung keine Bearbeitung des Abdichtungsprofils in engen Toleranzen erforderlich, wie es im Stand der Technik bei derartigen Rohrkupplungen unabdingbar nötig war. Durch die gewölbte Dichtfläche an dem Vorsprung des Abdichtungsprofils der Kupplung wird eine sichere Abdichtung in jeder Situation eines Zusammenfügens der Kupplungsteile erzielt. Der Vorsprung mit der gewölbten Dichtfläche kann dabei aus dem gleichen Material, d. h. einstückig mit dem betreffenden Kupplungsteil, realisiert sein. Alternativ kann der Vorsprung auch aus einem anderen Material als demjenigen des Kupplungsteils hergestellt sein, wobei auch dann der Vorsprung vorzugsweise einstückig an dem Flansch angeformt ist. In jedem Fall ist der Vorsprung fest mit dem Flansch des Kupplungsteils verbunden, so dass kein separates Bauteil beim Zusammenfügen der Kupplungsteile eingesetzt werden muss.

Dabei ist die Dichtfläche des Vorsprungs mit einer im Querschnitt nach außen gewölbten Form gebildet. Wenn die Kupplung geschlossen ist und die Kupplungsteile fest miteinander verschraubt sind, wird die gewölbte Form der Dichtfläche des Vorsprungs in die Nut eingepresst. Mit der in der Nut verpressten Wölbung des Vorsprungs wird eine noch dichtere Abdichtung der Kupplung erreicht. Wenn die Kupplungsteile der Rohrkupplung beispielsweise aus einem Kunststoffmaterial hergestellt sind, wird beim festen Verschrauben der Kupplung die gewölbte Fläche als eine hocheffiziente Dichtfläche in der Nut verpresst. Aufgrund der Nachgiebigkeit des Materials des Vorsprungs erzeugt das feste Verschrauben der Kupplungsteile somit direkt eine sehr gute Abdichtung zwischen dem Vorsprung und der Nut in dem Gegenflansch des anderen Kupplungsteils.

Gemäß der Erfindung ist die Gegendichtfläche der Nut an dem Flansch des Kupplungsteils mit einer entsprechenden Gegenschräge im Verhältnis zu der Dichtfläche des Vorsprungs gebildet. Bei einem Schließen der Kupplung werden die gewölbte Dichtfläche und die schräge Gegendichtfläche der Nut zunehmend gegeneinander über einen vergleichsweise breiten Bereich hinweg gepresst, so dass eine noch größere Dichtungswirkung erreicht wird. Die zusammengepresste Dichtfläche und schräge Gegendichtfläche bilden dabei eine Art feste Formpassung, die aufgrund des Drucks durch das Zusammenschrauben der Kupplungsteile sicher und langfristig fixiert ist. Daher ist die Abdichtung der Kupplung auch über einen langen Zeitraum hinweg und auch bei aggressiven Prozessfluiden immer sicher gewährleistet.

Gemäß einer weiteren vorteilhaften Ausgestaltung der Erfindung weist die Nut einen kegelstumpfförmigen Querschnitt mit einer zur Längsachse der Kupplung parallelen Nutenwand und einer demgegenüber schrägen Nutenwand auf. Mit solch einer Querschnittsform wird eine Art trapezförmige Nut realisiert. Die im Verhältnis zur Längsachse parallele Nutenwand bildet dabei im Zusammenspiel mit einer geraden Wand des Vorsprungs eine Art Führung beim Zusammensetzen der Kupplungsteile, wohingegen die schräge Nutenwand mit der gewölbten Dichtfläche ein hocheffizientes Abdichtungsmittel beim Zusammenschrauben der Kupplungsteile bildet. Anders als bei geradlinigen Kombinationen von Nuten und Vorsprüngen bzw. Zungen, wie sie im Stand der Technik bekannt waren, ist hierbei die Dichtungswirkung weiter verstärkt, ohne dass das Abdichtungsprofil an den Stirnflächen der Flansche in sehr genauen, engen Toleranzen hergestellt werden muss.

Gemäß einer vorteilhaften Ausgestaltung der erfindungsgemäßen Kupplung ist zwischen dem Vorsprung und der Nut an der radialen Außenseite und/oder der Stirnseite im geschlossenen Zustand der Kupplung ein Spalt vorhanden. Mit dem Spalt zwischen der Außenseite bzw. Stirnseite des Vorsprungs und den Innenwänden der Nut wird ein sicherer und sehr dichter Presssitz in Form eines Abdichtungsprofils erreicht. Der Vorsprung und die Nut haben hierzu ein ausreichendes Spiel zwischen den Komponenten, außer an der gewölbten Dichtfläche und der zur Anlage der Dichtfläche dienenden Gegendichtfläche. Ein solcher Spalt kann beispielsweise in der Größenordnung von einigen Millimetern und vorzugsweise von 0,5 mm vorgesehen sein. Die Abdichtungsstelle der erfindungsgemäßen Pressdichtung ist hierbei an der Innenseite der Nut und des Vorsprungs gebildet, d. h. an der zu dem Inneren der Rohrleitungen weisenden Stelle, so dass die Abdichtung an einer Stelle nahe zu dem Fluid erfolgt. Mit solch einem Spalt gemäß der Erfindung zwischen der Nut und dem Vorsprung an der Außenseite oder an der Außenseite und der Stirnseite ist ferner ein gewisses Spiel zwischen dem verpressten Vorsprung und der Nut vorhanden, was das Herstellen Dichtungswirkung weiter erleichtert. Die beiden Kupplungsteile müssen einfach beispielsweise durch eine Überwurfmutter fest miteinander verschraubt werden, und die Abdichtung entsteht dabei automatisch.

Gemäß eine Ausgestaltung der Erfindung ist die Dichtfläche des Vorsprungs schräg und der Vorsprung weist einen kegelstumpfförmigen Querschnitt auf.

Gemäß einer weiteren vorteilhaften Ausgestaltung der Erfindung weist die schräge Dichtfläche des Vorsprungs an dem einen Kupplungsteil einen von der schrägen Nutenwand verschiedenen Schrägungswinkel auf. Mit solch unterschiedlich geneigten bzw. schrägen Formen an der Dichtfläche einerseits und der Gegendichtfläche im Inneren der Nut andererseits kann eine progressiv zunehmende Presswirkung erreicht werden, die beim Einpressen des Vorsprungs in die Nut erzeugt wird. Hierdurch kann die Position der Abdichtung gezielt mehr nach innen oder mehr nach außen von der Nut je nach Bedarf und Einsatzzweck der Kupplung verlagert werden. Mit einer unterschiedlich geneigten Dichtfläche im Verhältnis zur Gegendichtfläche kann auch das Anpressen der Dichtfläche weiter verbessert werden, so dass eine verbesserte Abdichtung hierdurch erzielt wird. Der Unterschied in der Abschrägung kann vorzugsweise einige Grad, wie zum Beispiel 2 bis 5 Grad, im Verhältnis zur Längsachse der Kupplung betragen.

Gemäß einer weiteren vorteilhaften Ausgestaltung der Erfindung besteht der Vorsprung mindestens abschnittsweise aus einem plastisch oder elastisch verformbaren Material. Wenn der an dem Flansch des einen Kupplungsteils vorgesehene Vorsprung abschnittsweise, nämlich im Bereich der Dichtfläche, aus einem verformbaren Material realisiert wird, kann beim Andrücken und Einpressen des Vorsprungs in die Nut an dem anderen Flansch des anderen Kupplungsteils die Dichtfläche gezielt verformt werden. Mit einer solchen gezielten Verformung wird eine weiter verbesserte Abdichtung der Kupplung im geschlossenen Zustand erreicht. Gemäß einer diesbezüglich alternativen Ausgestaltung der erfindungsgemäßen Kupplung besteht der Vorsprung aus einem vom Rest der Kupplung verschiedenen Material. Ein Vorsprung gemäß dieser Ausgestaltung kann zum Beispiel aus einem elastisch federnden Material hergestellt werden, so dass mit einer Federwirkung die Anpressung des Vorsprungs mit der schrägen Dichtfläche an die Gegendichtfläche in der Nut weiter verbessert wird. Beispielsweise können der Vorsprung und der Rest der Kupplung aus verschiedenen Kunststoffmaterialien realisiert werden, wobei der Vorsprung vorzugsweise direkt an dem Flansch des entsprechenden Kupplungsteils mit angegossen ist.

Gemäß einer weiteren vorteilhaften Ausgestaltung der Erfindung weist die Gegendichtfläche im Inneren der Nut eine gewölbte, schräge Form auf. In diesem Fall hat die Gegendichtfläche der Nut eine leicht nach außen gewölbte Form, die beim Zusammensetzen und Verschrauben der Kupplungsteile gezielt gepresst wird. Die gewölbte Form der schrägen Gegendichtfläche hat den Vorteil, dass hierdurch die Abdichtung noch sicherer gemacht wird. Ähnlich wie bei der gewölbten Form der Dichtfläche wird die Gegendichtfläche in diesem Fall beim Zusammenschrauben der Kupplungsteile fest gepresst und beispielsweise elastisch oder plastisch leicht verformt. Ein Auftreten von Lecks ist daher bei der erfindungsgemäßen Kupplung sicher vermieden.

Die Erfindung wird im Folgenden mehr im Detail anhand eines Ausführungsbeispiels unter Bezugnahme auf die beigefügten Zeichnungen erläutert werden. In den Zeichnungen zeigen:
Fig. 1 eine Querschnittsdarstellung eines Ausführungsbeispiels einer erfindungsgemäßen Kupplung für Rohrelemente im getrennten Zustand ohne Überwurfmutter;
Fig. 1a eine Schnittansicht eines Details des Vorsprungs mit der Dichtfläche gemäß dem Ausführungsbeispiel;
Fig. 1b eine Schnittansicht eines Details der Nut mit der Gegendichtfläche gemäß dem Ausführungsbeispiel; und
Fig. 2 eine Querschnittsansicht des Ausführungsbeispiels der erfindungsgemäßen Kupplung für Rohrelemente im montierten Zustand.

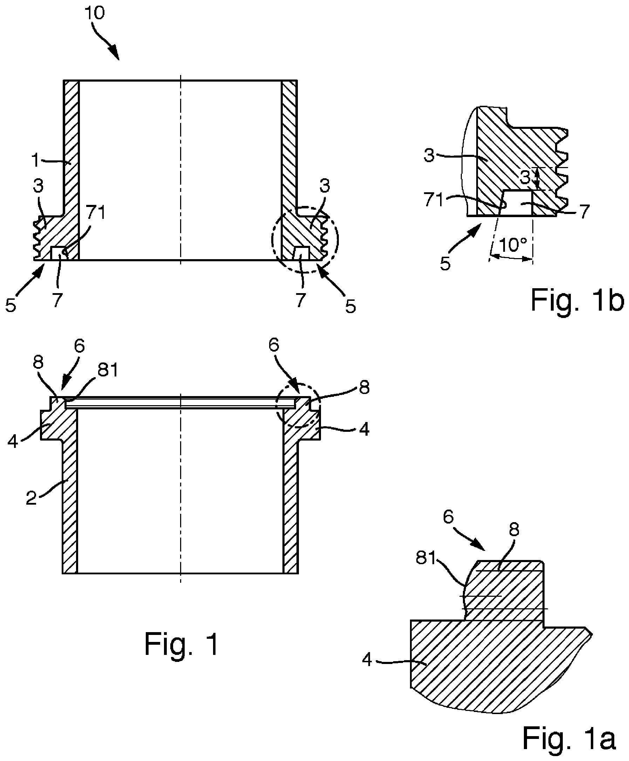

Die Fig. 1 zeigt in einer Querschnittsdarstellung ein Ausführungsbeispiel einer erfindungsgemäßen Kupplung 10 für Rohrleitungen in einem getrennten Zustand. Aus den Querschnittsansichten der Fig. 1a und Fig. 1b sind vergrößerte Details der Kupplung 10 im Bereich des Vorsprungs 8 und der Nut 7 gezeigt. Die Kupplung 10 ist eine sogenannte Schraubverbindung für Rohrabschnitte, welche auch als Union bezeichnet wird. Sie dient für ein lösbares Verbinden von verschiedenen Rohrelementen, wie zum Beispiel Fittinge, in einem Rohrleitungssystem oder ähnlichem. Die Kupplung 10 gemäß der Erfindung weist ein erstes Kupplungsteil 1 und ein zweites Kupplungsteil 2 auf, welche im montierten Zustand miteinander fest oder lösbar verbunden werden. Hierzu weist das erste Kupplungsteil 1 ein Außengewinde an einem radial nach außen vorragenden Flansch 3 auf, und das zweite Kupplungsteil 2 ist ebenfalls mit einem radial nach außen weisenden Flansch 4 gebildet. Eine Überwurfmutter (in der Fig. 1 nicht dargestellt) wird über das zweite Kupplungsteil 2 geschoben und mit dem Außengewinde des Flansches 3 des ersten Kupplungsteils 1 verschraubt, so dass die jeweiligen Enden des ersten und zweiten Kupplungsteils 1, 2 dann aneinanderliegen bzw. ineinandergreifen. Damit eine fluiddichte Verbindung mit der Kupplung 10 ermöglicht wird, sind an den Stirnseiten der Flansche 3, 4 jeweils spezifische Profile zur Abdichtung vorgesehen. Gemäß dem gezeigten Ausführungsbeispiel der Erfindung ist in dem Flansch 3 eine umlaufende Nut 7 gebildet, und in dem Flansch 4 des zweiten Kupplungsteils 2 ist ein formentsprechender Vorsprung 8 vorhanden. Die Stirnflächen 5, 6 der Kupplungsteile 1, 2 sind also mit einem speziellen Dichtungsprofil geformt. Gemäß der vorliegenden Erfindung ist der umlaufende Vorsprung 8 an dem Flansch 4 des zweiten Kupplungsteils 2 mit einer radial nach innen weisenden Dichtfläche 81 versehen, die im Verhältnis zur Längsachse der Kupplung 10 leicht schräg bzw. geneigt verläuft. Somit ist der Vorsprung 8 in einer im Querschnitt im Wesentlichen trapezförmigen Form gebildet. Auf der radial äußeren Seite ist der Vorsprung mit einer Wand parallel zu der Längsachse der Kupplung 10 geformt, wohingegen an der radial inneren Seite eine schräge Dichtfläche 81 vorhanden ist, welche im montierten Zustand an einer Gegendichtfläche 71 der umlaufenden Nut 7 angepresst wird. Die spezielle erfindungsgemäße Form des Abdichtungsprofils der Kupplung 10 ist in den Detailansichten der Querschnitte der Fig. 1a und Fig. 1b besser zu erkennen.

Wie es in der Fig. 1a und Fig. 1b gezeigt ist, ist die schräge Dichtfläche 81 des Vorsprungs 8 in einer in dem mittleren Bereich leicht nach außen gewölbten Form realisiert. Die dem Einsetzen des Vorsprungs 8 dienende Nut 7 in dem Flansch 3 des ersten Kupplungsteils 1 ist entsprechend mit einer schrägen Gegendichtfläche 71 versehen, die gegenüber der anderen Nutwand hier in einem Winkel von in etwa 10° schräg verläuft. Wenn im zusammengebauten Zustand der Kupplung 10 der Vorsprung 8 in die Nut 7 eingeführt wird, wird die leicht nach außen gewölbte schräge Dichtfläche 81 gegen die Gegendichtfläche 71 gepresst, so dass aufgrund des Presssitzes eine wirksame Abdichtung der Kupplung 10 erfolgt. Die Nut 7 und der Vorsprung 8 sind dazu in ihrer Form, Position und Abmessung derart aufeinander abgestimmt, dass beim Zusammenschrauben der Kupplungsteile 1, 2 die gewölbte Form der schrägen Dichtfläche 81 im Inneren der Nut 7 quasi verpresst wird. Hierdurch ist kein zusätzliches Dichtmittel, wie zum Beispiel eine O-Ring-Dichtung aus Elastomer oder ähnliches, erforderlich, um eine fluiddichte Abdichtung an der Verbindungsstelle der Kupplung 10 herzustellen. Außerdem müssen erfindungsgemäß der Vorsprung 8 und die Nut 7 nicht in den sehr engen Toleranzen hergestellt werden, wie sie bei im Stand der Technik bekannten derartigen Formsitzabdichtungen mit geradlinig geformten Nuten und Vorsprüngen erforderlich waren. Bei der erfindungsgemäßen Kupplung 10 ist die Dichtfläche 81 nicht nur leicht, beispielsweise um 10°, schräg zu der Längsachse der Kupplung und damit der geradlinigen Seitenfläche des Vorsprungs 8, sondern darüber hinaus noch nach außen etwas gewölbt oder ausgebaucht. Außerdem kann die Form der Nut 7 anders als dargestellt ebenfalls mit einer gebogenen Gegendichtfläche versehen sein.

In jedem Fall bietet die erfindungsgemäße Abdichtung mittels eines speziell angepassten Profils der Stirnflächen 5, 6 der Flansche 3, 4 der Kupplungsteile 1, 2 eine hochwirksame und langfristige Dichtfunktion aufgrund der eingepressten gewölbten Dichtfläche 81 im Zusammenwirken mit der Gegendichtfläche 71 in der Nut 7. Die Position der erfindungsgemäßen Abdichtung liegt dabei im Inneren der Kupplung 10 nahe an der Verbindungsstelle der Flansche 3, 4, so dass eine Abdichtung nahe an dem in der Kupplung 10 strömenden Prozessfluid erfolgt. Da kein separates Dichtungselement wie ein O-Ring oder ähnliches eingesetzt werden muss, ist eine sichere Abdichtung in jedem Fall gewährleistet. Die Abdichtung wird automatisch hergestellt beim Zusammenschrauben der Kupplungsteile 1, 2 und durch das damit einhergehende Zusammenpressen der Dichtfläche 81 im Inneren der Nut 7. Ein Fehler bei der Montage und dem Einsetzen von Dichtungsringen usw. kann dadurch nicht entstehen. Auch ist diese erfindungsgemäße Art einer Abdichtung unanfällig gegenüber Beschädigung seitens von aggressiven Prozessmedien, da sie quasi einstückig als Abdichtungsprofil an den Stirnflächen 5, 6 der jeweiligen Flansche 3, 4 gebildet ist.

Bei dem hier gezeigten Ausführungsbeispiel ist das Außengewinde für die Schraubverbindung an der Außenseite des Flansches 3 des ersten Kupplungsteils 1 vorgesehen. Selbstverständlich kann das Außengewinde auch an dem Flansch 4 des zweiten Kupplungsteils vorgesehen sein.

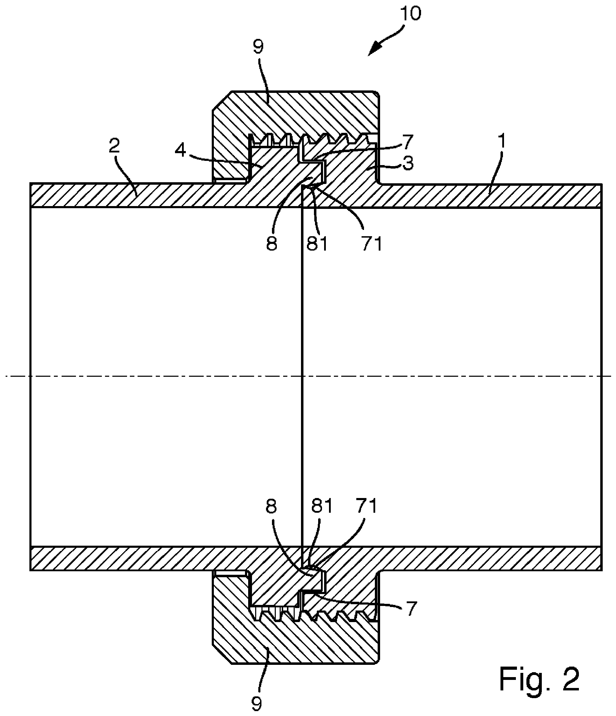

Die Querschnittsansicht der Fig. 2 zeigt die erfindungsgemäße Kupplung 10 im zusammengebauten, abgedichteten Zustand. Eine Überwurfmutter 9 ist über das zweite Kupplungsteil 2 aufgeschoben und mit ihrem Innengewinde mit dem Außengewinde des Flansches 3 des ersten Kupplungsteils 1 verschraubt. Auf diese Weise wird der umlaufende Vorsprung 8 in die entsprechend positionierte Nut 7 des Flansches 3 eingeführt. Dabei wird die nach außen gewölbte, schräge Dichtfläche 81 des Vorsprungs 8 an der radial inneren Seite an der Gegendichtfläche 71 der Nut 7 verpresst. Durch dieses Einpressen des Vorsprungs 8 wird eine sichere Abdichtung der Kupplung 10 an der Verbindungsstelle erzielt. Die Querschnittsform des Vorsprungs 8 ist eine Art trapezförmiger Querschnitt, d. h. an einer Seite mit einer geraden, zur Längsachse der Kupplung 10 parallel verlaufenden Fläche (außen) und einer gewölbten, schrägen Dichtfläche 81, die bei diesem Ausführungsbeispiel um in etwa 10° im Verhältnis zur geradlinigen Fläche geneigt ist, gebildet. Die Form der Nut 7 ist dementsprechend an der Innenseite ebenfalls mit einer schrägen Gegendichtfläche 71 und einer gegenüberliegenden geraden Nutenwand (außen) versehen. Wie es aus der Fig. 2 zu erkennen ist, ist bei diesem Ausführungsbeispiel im montierten Zustand der Kupplung 10 ein kleiner Spalt an der Stirnseite und der Außenseite zwischen dem Vorsprung 8 und der Nut 7 vorhanden.

Mit solch einem Spalt von beispielsweise 0,5 mm bis 1,5 mm ist ein sicheres und festes Einpressen der gewölbten, schrägen Dichtfläche 8 an der Verbindung zwischen dem ersten Kupplungsteil 1 und dem zweiten Kupplungsteil 2 möglich. Der Vorsprung 8 ist direkt mit dem Flansch 4 einstückig verbunden, d. h. der Vorsprung 8 ist Teil und ist aus dem gleichen Material wie der Rest des Kupplungsteils 2. Gemäß einer demgegenüber alternativen Ausgestaltung kann der Vorsprung 8 auch aus einem anderen Material als der Rest des Kupplungsteils 2 gebildet sein, beispielsweise aus einem elastisch verformbaren Material und/oder aus einem leicht federnden Material, wodurch die Abdichtungswirkung weiter verbessert wird. Anstatt von einem Vorsprung 8 und einer dementsprechend vorgesehenen umlaufenden Nut 7 können erfindungsgemäß auch mehrere Vorsprünge und Nuten nebeneinander in den jeweiligen Flanschen 3, 4 vorgesehen sein, beispielsweise um eine noch bessere Abdichtung an mehreren Stellen an den Flanschen 3, 4 der Kupplung 10 zu bieten. Die erfindungsgemäße Kupplung 10 ist leicht zu handhaben und bietet beim Zusammensetzen automatisch eine sichere Abdichtung, ohne dass eine genaue Positionierung beim Einsetzen der Teile zu beachten ist. Dennoch ist die erfindungsgemäße Kupplung 10 jederzeit wieder lösbar, beispielsweise für ein Austauschen von Bauteilen in einem Rohrleitungssystem. Nicht zuletzt werden durch die erfindungsgemäße gewölbte Dichtfläche 81 an dem Vorsprung 8 und die entsprechende schräge Gegendichtfläche 71 in der Nut 7 die Kupplungsteile 1, 2 zueinander in ihrer relativen Lage genau positioniert. Neben der Abdichtung hat somit das Abdichtungsprofil mit einem Vorsprung 8 und einer Nut 7 den Vorteil einer genauen Lagepositionierung.

## Patentansprüche

1. Kupplung (10) zum lösbaren Verbinden von Rohren oder rohrförmigen Elementen in einer fluiddichten Weise mit einem ersten Kupplungsteil (1) und einem zweiten Kupplungsteil (2), welche über eine Schraubmutter oder ähnliches verbindbar sind, wobei die Kupplungsteile (1, 2) jeweils mit einem radial nach außen sich erstreckenden Flansch (3, 4) versehen sind und die Flansche (3, 4) Stirnflächen (5, 6) aufweisen, die mit einem Profil zur Abdichtung der Kupplung versehen sind, wobei das Profil mindestens eine umlaufende Nut (7) und mindestens einen in die Nut (7) eingreifenden umlaufenden Vorsprung (8) umfasst, welche im gekoppelten Zustand zwischen sich eine fluiddichte Abdichtung bilden, **dadurch gekennzeichnet, dass** der Vorsprung (8) eine erste Seitenfläche und eine zweite Seitenfläche (81) umfasst, wobei die erste Seitenfläche gerade und parallel zu einer Längsachse der Kupplung (10) verläuft, und wobei die zweite Seitenfläche (81) mindestens bereichsweise eine im Querschnitt nach außen gewölbte Form aufweist, wodurch eine seitliche Dichtfläche (81) gebildet wird, und dass die Nut (7) eine erste Seitenfläche und eine zweite Seitenfläche (71) aufweist, wobei die erste Seitenfläche der Nut (7) gerade und parallel zu einer Längsachse der Kupplung (10) verläuft, und wobei die zweite Seitenfläche (71) eine zu der zweiten Seitenfläche (81) des Vorsprungs (8) entsprechende seitliche und im Verhältnis zur Längsachse der Kupplung (10) schräge seitliche Gegendichtfläche (71) bildet, so dass in Einbaulage die nach außen gewölbte seitliche Dichtfläche (81) des Vorsprungs (8) gegen die seitliche Gegendichtfläche (71) der Nut (7) gepresst wird, und dass die seitliche Dichtfläche (81) des Vorsprungs (8) und die erste Seitenfläche der Nut (7) in Richtung der Längsachse der Kupplung (10) gesehen auf gleicher Höhe angeordnet sind.

2. Kupplung nach Anspruch 1, **dadurch gekennzeichnet, dass** die Nut (7) einen kegelstumpfförmigen Querschnitt aufweist, wobei die erste Seitenfläche eine zur Längsachse der Kupplung (10) parallele Nutenwand bildet und die zweite Seitenfläche (71) eine demgegenüber schräge Nutenwand bildet.

3. Kupplung nach einem der vorhergehenden Ansprüche, **dadurch gekennzeichnet, dass** die Dichtfläche (81) des Vorsprungs (8) schräg ist und der Vorsprung (8) einen kegelstumpfförmigen Querschnitt aufweist.

4. Kupplung nach einem der vorhergehenden Ansprüche, **dadurch gekennzeichnet, dass** zwischen dem Vorsprung (8) und der Nut (7) an der radialen Außenseite und/oder der Stirnseite im geschlossenen Zustand der Kupplung (10) ein Spalt vorhanden ist.

5. Kupplung nach Anspruch 3, **dadurch gekennzeichnet, dass** die Dichtfläche (81) einen von der schrägen Nutenwand verschiedenen Schrägungswinkel aufweist.

6. Kupplung nach einem der vorhergehenden Ansprüche, **dadurch gekennzeichnet, dass** der Vorsprung (8) mindestens abschnittsweise aus einem plastisch oder elastisch verformbaren Material besteht.

7. Kupplung nach einem der vorhergehenden Ansprüche, **dadurch gekennzeichnet, dass** der Vorsprung (8) aus einem vom Rest der Kupplung verschieden Material besteht.

8. Kupplung nach einem der vorhergehenden Ansprüche, **dadurch gekennzeichnet, dass** die Gegendichtfläche (71) der Nut (7) eine gewölbte schräge Form aufweist.

## Claims

1. Coupling (10) for detachably connecting tubes or tube-shaped elements in a fluid-tight manner, with a first coupling part (1) and a second coupling part (2), which can be connected by means of a nut or something similar, wherein the coupling parts (1, 2) are respectively provided with a flange (3, 4) extending radially outward, and the flanges (3, 4) have end surfaces (5, 6) that are provided with a profile for sealing the coupling, wherein the profile comprises at least a circumferential groove (7) and at least a circumferential projection (8) engaging with the groove (7), which, in the coupled condition, produce a fluid-tight seal between themselves, **characterized in that** the projection (8) has a first lateral surface and a second lateral surface (81), wherein the first lateral surface extends straight and parallel to a longitudinal axis of the coupling (10), and wherein the second lateral surface (81), in cross section, at least in sections has an outwardly curved shape, by which a lateral sealing surface (81) is formed, and that the groove (7) comprises a first lateral surface and a second lateral surface (71), wherein the first lateral surface of the groove (7) extends straight and parallel to a longitudinal axis of the coupling (10), and wherein the second lateral surface (71) forms a lateral counter sealing surface (71), which is lateral and corresponding to the second lateral surface (81) of the projection (8) and relative to the longitudinal axis of the coupling (10) inclined, such that, in mounting position, the outwardly curved lateral sealing surface (81) of the projection (8) is pressed against the lateral counter sealing surface (71) of the groove (7), and that the lateral sealing surface (81) of the projection (8) and the first lateral surface of the groove (7), seen in the direction of the longitudinal axis of the coupling (10), are positioned at the same height.

2. Coupling according to claim 1, **characterized in that** the groove (7) comprises a truncated cone-shaped cross-section, wherein the first lateral surface forms a groove wall parallel to the longitudinal axis of the coupling (10) and the second lateral surface (71) a groove wall inclined relative thereto.

3. Coupling according to one of the preceding claims, **characterized in that** the sealing surface (81) of the projection (8) is inclined and the projection (8) has a truncated cone-shaped cross section.

4. Coupling according to one of the preceding claims, **characterized in that** a gap exists between the projection (8) and the groove (7) on the radial outer face and/or on the end surface in the closed condition of the coupling (10).

5. Coupling according to claim 3, **characterized in that** the sealing surface (81) has an inclination angle that is different from that of the inclined groove wall.

6. Coupling according to one of the preceding claims, **characterized in that** the projection (8) consists at least in sections of a plastically or elastically deformable material.

7. Coupling according to one of the preceding claims, **characterized in that** the projection (8) consists of a different material than the rest of the coupling.

8. Coupling according to one of the preceding claims, **characterized in that** the counter sealing surface (71) of the groove (7) has a curved, inclined shape.

## Revendications

1. Accouplement (10) destiné à relier de manière amovible et étanche aux fluides des tuyaux ou des éléments tubulaires avec une première pièce d'accouplement (1) et une seconde pièce d'accouplement (2) qui peuvent être reliées par l'intermédiaire d'un écrou ou similaire, dans lequel les pièces d'accouplement (1, 2) sont respectivement munies d'une bride (3, 4) s'étendant de manière radiale vers l'extérieur et les brides (3, 4) présentent des faces terminales (5, 6) munies d'un profil destiné à rendre étanche l'accouplement, dans lequel le profil comprend au moins une rainure circonférentielle (7) et au moins une saillie circonférentielle (8) venant en prise dans la rainure (7), qui, à l'état accouplé, forment entre elles un étanchement étanche aux fluides, **caractérisé en ce que** la saillie (8) comprend une première surface latérale et une seconde surface latérale (81), dans lequel la première surface latérale est rectiligne et parallèle à un axe longitudinal de l'accouplement (10), et dans lequel la seconde surface latérale (81) présente au moins dans certaines régions une forme incurvée vers l'extérieur en coupe transversale, ce qui forme une surface d'étanchéité latérale (81), et **en ce que** la rainure (7) présente une première surface latérale et une seconde surface latérale (71), dans lequel la première surface latérale de la rainure (7) est rectiligne et parallèle à un axe longitudinal de l'accouplement (10), et dans lequel la seconde surface latérale (71) forme une contre-surface d'étanchéité latérale (71) correspondant à la seconde surface latérale (81) de la saillie (8), et latérale inclinée par rapport à l'axe longitudinal de l'accouplement (10), de sorte que, en position d'installation, la surface d'étanchéité latérale (81), incurvée vers l'extérieur, de la saillie (8) est pressée contre la contre-surface d'étanchéité latérale (71) de la rainure (7), et **en ce que** la surface d'étanchéité latérale (81) de la saillie (8) et la première surface latérale de la rainure (7) sont agencées dans le sens de l'axe longitudinal de l'accouplement (10) lorsqu'on les observe à la même hauteur.

2. Accouplement selon la revendication 1, **caractérisé en ce que** la rainure (7) présente une section transversale tronconique, dans lequel la première surface latérale forme une paroi de rainure parallèle à l'axe longitudinal de l'accouplement (10) et la seconde surface latérale (71) forme une paroi de rainure comparativement inclinée.

3. Accouplement selon l'une quelconque des revendications précédentes, **caractérisé en ce que** la surface d'étanchéité (81) de la saillie (8) est inclinée et la saillie (8) présente une section transversale tronconique.

4. Accouplement selon l'une quelconque des revendications précédentes, **caractérisé en ce que**, à l'état fermé de l'accouplement (10), un espace est présent entre la saillie (8) et la rainure (7) au niveau du côté extérieur radial et/ou de la face terminale.

5. Accouplement selon la revendication 3, **caractérisé en ce que** la surface d'étanchéité (81) présente un angle d'inclinaison différent de celui de la paroi de rainure inclinée.

6. Accouplement selon l'une quelconque des revendications précédentes, **caractérisé en ce que** la saillie (8) est constituée, au moins dans certaines sections, d'un matériau pouvant être déformé de manière plastique ou élastique.

7. Accouplement selon l'une quelconque des revendications précédentes, **caractérisé en ce que** la saillie (8) est constituée d'un matériau différent de celui constituant le reste de l'accouplement.

8. Accouplement selon l'une quelconque des revendications précédentes, **caractérisé en ce que** la contre-surface d'étanchéité (71) de la rainure (7) présente une forme inclinée incurvée.
